# EUROPEAN PATENT SPECIFICATION

(11) **EP 2 050 235 B1**
(45) Date of publication and mention of the grant of the patent: **06.04.2011**
(21) Application number: 07813469.9
(22) Date of filing: 27.07.2007
(51) Int. Cl.: H04L 12/56

(54) **SYSTEMS AND METHODS FOR SAR-CAPABLE QUALITY OF SERVICE**
SYSTEME UND VERFAHREN FÜR SAR-FÄHIGE DIENSTGÜTE
SYSTÈMES ET PROCÉDÉS POUR QUALITÉ DE SERVICE DE CAPACITÉ SAR

(30) Priority: 31.07.2006 US 461052
(43) Date of publication of application: 22.04.2009
(73) Proprietor: Harris Corporation, Melbourne, FL 32919 (US)
(72) Inventor: SMITH, Donald, L., Satellite Beach, Florida 32937 (US); GALLUSCIO, Anthony, P., Indialantic, Florida 32903 (US); KNAZIK, Robert, J., Cocoa Beach, Florida 32931 (US)
(74) Representative: Schmidt, Steffen J.
(86) International application number: PCT/US2007/074587
(87) International publication number: WO 2008/016846

(56) References cited:
- EP-A- 1 193 938
- US-B1- 6 819 681
- DEFENSE ADVANCED RESEARCH PROJECTS AGENCY INFORMATION SCIENCES INSTITUTE UNIVERSITY OF SOUTHERN CALIFORNIA 4676 ADMIRALTY WAY MARI: "INTERNET PROTOCOL DARPA INTERNET PROGRAM PROTOCOL SPECIFICATION ; rfc791.txt" IETF STANDARD, INTERNET ENGINEERING TASK FORCE, IETF, CH, September 1981 (1981-09), XP015006773 ISSN: 0000-0003

## Description

The presently described technology generally relates to communications networks. More particularly, the presently described technology relates to systems and methods for protocol filtering for Quality of Service.

Communications networks are utilized in a variety of environments. Communications networks typically include two or more nodes connected by one or more links. Generally, a communications network is used to support communication between two or more participant nodes over the links and intermediate nodes in the communications network. There may be many kinds of nodes in the network. For example, a network may include nodes such as clients, servers, workstations, switches, and/or routers. Links may be, for example, modem connections over phone lines, wires, Ethernet links, Asynchronous Transfer Mode (ATM) circuits, satellite links, and/or fiber optic cables.

A communications network may actually be composed of one or more smaller communications networks. For example, the Internet is often described as network of interconnected computer networks. Each network may utilize a different architecture and/or topology. For example, one network may be a switched Ethernet network with a star topology and another network may be a Fiber-Distributed Data Interface (FDDI) ring.

Communications networks may carry a wide variety of data. For example, a network may carry bulk file transfers alongside data for interactive real-time conversations. The data sent on a network is often sent in packets, cells, or frames. Alternatively, data may be sent as a stream. In some instances, a stream or flow of data may actually be a sequence of packets. Networks such as the Internet provide general purpose data paths between a range of nodes and carrying a vast array of data with different requirements.

Communication over a network typically involves multiple levels of communication protocols. A protocol stack, also referred to as a networking stack or protocol suite, refers to a collection of protocols used for communication. Each protocol may be focused on a particular type of capability or form of communication. For example, one protocol may be concerned with the electrical signals needed to communicate with devices connected by a copper wire. Other protocols may address ordering and reliable transmission between two nodes separated by many intermediate nodes, for example.

Protocols in a protocol stack typically exist in a hierarchy. Often, protocols are classified into layers. One reference model for protocol layers is the Open Systems Interconnection ("OSI") model. The OSI reference model includes seven layers: a physical layer, data link layer, network layer, transport layer, session layer, presentation layer, and application layer. The physical layer is the "lowest" layer, while the application layer is the "highest" layer. Two well-known transport layer protocols are the Transmission Control Protocol ("TCP") and User Datagram Protocol ("UDP"). A well known network layer protocol is the Internet Protocol ("IP").

At the transmitting node, data to be transmitted is passed down the layers of the protocol stack, from highest to lowest. Conversely, at the receiving node, the data is passed up the layers, from lowest to highest. At each layer, the data may be manipulated by the protocol handling communication at that layer. For example, a transport layer protocol may add a header to the data that allows for ordering of packets upon arrival at a destination node. Depending on the application, some layers may not be used, or even present, and data may just be passed through.

One kind of communications network is a tactical data network. A tactical data network may also be referred to as a tactical communications network. A tactical data network may be utilized by units within an organization such as a military (e.g., army, navy, and/or air force). Nodes within a tactical data network may include, for example, individual soldiers, aircraft, command units, satellites, and/or radios. A tactical data network may be used for communicating data such as voice, position telemetry, sensor data, and/or real-time video.

An example of how a tactical data network may be employed is as follows. A logistics convoy may be in-route to provide supplies for a combat unit in the field. Both the convoy and the combat unit may be providing position telemetry to a command post over satellite radio links. An unmanned aerial vehicle ("UAV") may be patrolling along the road the convoy is taking and transmitting real-time video data to the command post over a satellite radio link also. At the command post, an analyst may be examining the video data while a controller is tasking the UAV to provide video for a specific section of road. The analyst may then spot an improvised explosive device ("lED") that the convoy is approaching and send out an order over a direct radio link to the convoy for it to halt and alerting the convoy to the presence of the IED.

The various networks that may exist within a tactical data network may have many different architectures and characteristics. For example, a network in a command unit may include a gigabit Ethernet local area network ("LAN") along with radio links to satellites and field units that operate with much lower throughput and higher latency. Field units may communicate both via satellite and via direct path radio frequency ("RF"). Data may be sent point-to-point, multicast, or broadcast, depending on the nature of the data and/or the specific physical characteristics of the network. A network may include radios, for example, set up to relay data. In addition, a network may include a high frequency ("HF") network which allows long rang communication. A microwave network may also be used, for example. Due to the diversity of the types of links and nodes, among other reasons, tactical networks often have overly complex network addressing schemes and routing tables. In addition, some networks, such as radio-based networks, may operate using bursts. That is, rather than continuously transmitting data, they send periodic bursts of data. This is useful because the radios are broadcasting on a particular channel that must be shared by all participants, and only one radio may transmit at a time.

Tactical data networks are generally bandwidth-constrained. That is, there is typically more data to be communicated than bandwidth available at any given point in time. These constraints may be due to either the demand for bandwidth exceeding the supply, and/or the available communications technology not supplying enough bandwidth to meet the user's needs, for example. For example, between some nodes, bandwidth may be on the order of kilobits/sec. In bandwidth-constrained tactical data networks, less important data can clog the network, preventing more important data from getting through in a timely fashion, or even arriving at a receiving node at all. In addition, portions of the networks may include internal buffering to compensate for unreliable links. This may cause additional delays. Further, when the buffers get full, data may be dropped.

In many instances the bandwidth available to a network cannot be increased. For example, the bandwidth available over a satellite communications link may be fixed and cannot effectively be increased without deploying another satellite. In these situations, bandwidth must be managed rather than simply expanded to handle demand. In large systems, network bandwidth is a critical resource. It is desirable for applications to utilize bandwidth as efficiently as possible. In addition, it is desirable that applications avoid "clogging the pipe," that is, overwhelming links with data, when bandwidth is limited. When bandwidth allocation changes, applications should preferably react. Bandwidth can change dynamically due to, for example, quality of service, jamming, signal obstruction, priority reallocation, and line-of-sight. Networks can be highly volatile and available bandwidth can change dramatically and without notice.

In addition to bandwidth constraints, tactical data networks may experience high latency. For example, a network involving communication over a satellite link may incur latency on the order of half a second or more. For some communications this may not be a problem, but for others, such as real-time, interactive communication (e.g., voice communications), it is highly desirable to minimize latency as much as possible.

Another characteristic common to many tactical data networks is data loss. Data may be lost due to a variety of reasons. For example, a node with data to send may be damaged or destroyed. As another example, a destination node may temporarily drop off of the network. This may occur because, for example, the node has moved out of range, the communication's link is obstructed, and/or the node is being jammed. Data may be lost because the destination node is not able to receive it and intermediate nodes lack sufficient capacity to buffer the data until the destination node becomes available. Additionally, intermediate nodes may not buffer the data at all, instead leaving it to the sending node to determine if the data ever actually arrived at the destination.

Often, applications in a tactical data network are unaware of and/or do not account for the particular characteristics of the network. For example, an application may simply assume it has as much bandwidth available to it as it needs. As another example, an application may assume that data will not be lost in the network. Applications which do not take into consideration the specific characteristics of the underlying communications network may behave in ways that actually exacerbate problems. For example, an application may continuously send a stream of data that could just as effectively be sent less frequently in larger bundles. The continuous stream may incur much greater overhead in, for example, a broadcast radio network that effectively starves other nodes from communicating, whereas less frequent bursts would allow the shared bandwidth to be used more effectively.

Certain protocols do not work well over tactical data networks. For example, a protocol such as TCP may not function well over a radio-based tactical network because of the high loss rates and latency such a network may encounter. TCP requires several forms of handshaking and acknowledgments to occur in order to send data. High latency and loss may result in TCP hitting time outs and not being able to send much, if any, meaningful data over such a network.

Information communicated with a tactical data network often has various levels of priority with respect to other data in the network. For example, threat warning receivers in an aircraft may have higher priority than position telemetry information for troops on the ground miles away. As another example, orders from headquarters regarding engagement may have higher priority than logistical communications behind friendly lines. The priority level may depend on the particular situation of the sender and/or receiver. For example, position telemetry data may be of much higher priority when a unit is actively engaged in combat as compared to when the unit is merely following a standard patrol route. Similarly, real-time video data from an UAV may have higher priority when it is over the target area as opposed to when it is merely in-route.

There are several approaches to delivering data over a network. One approach, used by many communications networks, is a "best effort" approach. That is, data being communicated will be handled as well as the network can, given other demands, with regard to capacity, latency, reliability, ordering, and errors. Thus, the network provides no guarantees that any given piece of data will reach its destination in a timely manner, or at all. Additionally, no guarantees are made that data will arrive in the order sent or even without transmission errors changing one or more bits in the data.

Another approach is Quality of Service ("QoS"). QoS refers to one or more capabilities of a network to provide various forms of guarantees with regard to data that is carried. For example, a network supporting QoS may guarantee a certain amount of bandwidth to a data stream. As another example, a network may guarantee that packets between two particular nodes have some maximum latency. Such a guarantee may be useful in the case of a voice communication where the two nodes are two people having a conversation over the network. Delays in data delivery in such a case may result in irritating gaps in communication and/or dead silence, for example.

QoS may be viewed as the capability of a network to provide better service to selected network traffic. The primary goal of QoS is to provide priority including dedicated bandwidth, controlled jitter and latency (required by some real-time and interactive traffic), and improved loss characteristics. Another important goal is making sure that providing priority for one flow does not make other flows fail. That is, guarantees made for subsequent flows must not break the guarantees made to existing flows.

Current approaches to QoS often require every node in a network to support QoS, or, at the very least, for every node in the network involved in a particular communication to support QoS. For example, in current systems, in order to provide a latency guarantee between two nodes, every node carrying the traffic between those two nodes must be aware of and agree to honor, and be capable of honoring, the guarantee.

There are several approaches to providing QoS. One approach is Integrated Services, or "IntServ." IntServ provides a QoS system wherein every node in the network supports the services and those services are reserved when a connection is set up. IntServ does not scale well because of the large amount of state information that must be maintained at every node and the overhead associated with setting up such connections.

Another approach to providing QoS is Differentiated Services, or "DiffServ." DiffServ is a class of service model that enhances the best-effort services of a network such as the Internet. DiffServ differentiates traffic by user, service requirements, and other criteria. Then, DiffServ marks packets so that network nodes can provide different levels of service via priority queuing or bandwidth allocation, or by choosing dedicated routes for specific traffic flows. Typically, a node has a variety of queues for each class of service. The node then selects the next packet to send from those queues based on the class categories.

Existing QoS solutions are often network specific and each network type or architecture may require a different QoS configuration. Due to the mechanisms existing QoS solutions utilize, messages that look the same to current QoS systems may actually have different priorities based on message content. However, data consumers may require access to high-priority data without being flooded by lower-priority data. Existing QoS systems cannot provide QoS based on message content at the transport layer.

As mentioned, existing QoS solutions require at least the nodes involved in a particular communication to support QoS. However, the nodes at the "edge" of network may be adapted to provide some improvement in QoS, even if they are incapable of making total guarantees. Nodes are considered to be at the edge of the network if they are the participating nodes in a communication (i.e., the transmitting and/or receiving nodes) and/or if they are located at chokepoints in the network. A chokepoint is a section of the network where all traffic must pass to another portion. For example, a router or gateway from a LAN to a satellite link would be a choke point, since all traffic from the LAN to any nodes not on the LAN must pass through the gateway to the satellite link.

Current network link designs are tedious and difficult. Dynamic, "on-the-fly" changes to network link designs are also difficult. Applications are forced to use a particular communications path rather than choosing the best communication path and throughput optimization mechanisms for a given operational scenario. Typically, transactions, protocols and communication paths are wrapped together, and communications links are not abstracted from the information that the links transport. Implementations often collapse or combine various layers of the OSI network model. Many networks require that the network be designed for a particular group of participants. The network is static, and even minor changes require considerable rework. For example, current tactical communications links (e.g., UAV) require significant operator intervention to switch from satellite communication links to line-of-sight wireless links.

Large packets sent across a bandwidth constrained network may cause significant delays while data is transmitted. In radio-based, frequency sharing networks, data transmission delays may cause other users longer wait times for sending data. Thus, there is a need for improved systems and methods for data transmission and sharing.

Existing segmentation and reassembly of data is done below the network layer and generally provides packets of at least 1000 bytes. Asynchronous Transfer Mode (ATM) provides segmentation and reassembly of approximately 32 bytes per packet at layer 2 of the OSI model. Internet Protocol (IP) ,disclosed in IETF RFC 791, provides segmentation of packets into 1500 byte sizes. For bandwidth constrained networks this packet size may still be too large and may cause significant transmission delays for all nodes in the network when large packets are processed.

Thus, there is a need for systems and methods providing QoS in a tactical data network. There is a need for systems and methods for providing QoS on the edge of a tactical data network. Additionally, there is a need for adaptive, configurable QoS systems and methods in a tactical data network.

Embodiments of the present invention provide systems and methods for data communication via a network.

Certain embodiments provide a method for data communication via a network. The method includes receiving a first data packet for transmission. The method also includes comparing a size of the first data packet to a data packet size criterion. The method further includes segmenting the first data packet to produce a plurality of segmented data packets when the size of the first data packet does not satisfy the data packet size criterion. The method includes transmitting the plurality of segmented data packets. Additionally, the method includes reassembling the plurality of segmented data packets into the first data packet for delivery to an application.

Certain embodiments provide a data communication system providing quality of service over a network. The system includes a first data communication subsystem and a second data communication subsystem. The first data communication subsystem receives a first data packet for transmission. The data communication subsystem segments the first data packet into a plurality of segmented data packets based on a data packet size threshold. The second data communication subsystem receives the plurality of segmented data packets. The second data communication subsystem reassembles the plurality of segmented data packets into the first data packet for delivery to an application.

Certain embodiments provide a computer-readable medium having a set of instructions for execution on a processing device. The set of instructions includes a segmentation routine for comparing a size of a first data packet to a data packet size criterion and segmenting the first data packet to produce a plurality of segmented data packets when the size of the first data packet exceeds the data packet size criterion. The set of instructions also includes a transmission routine for transmitting the plurality of segmented data packets. The set of instructions further includes a reassembly routine for reassembling the plurality of segmented data packets into the first data packet.
Fig. 1 illustrates a tactical communications network environment operating with an embodiment of the present invention.
Fig. 2 shows the positioning of the data communications system in the seven layer OSI network model in accordance with an embodiment of the present invention.
Fig. 3 depicts an example of multiple networks facilitated using the data communications system in accordance with an embodiment of the present invention.
Fig. 4 illustrates a data communication environment operating with an embodiment of the present invention.
Fig. 5 illustrates a flow diagram for a method for communicating data in accordance with an embodiment of the present invention.
Fig. 6 illustrates a data communication system with segmentation and reassembly capability in accordance with an embodiment of the present invention.

The foregoing summary, as well as the following detailed description of certain embodiments of the presently described technology, will be better understood when read in conjunction with the appended drawings. For the purpose of illustrating the presently described technology, certain embodiments are shown in the drawings. It should be understood, however, that the presently described technology is not limited to the arrangements and instrumentality shown in the attached drawings.

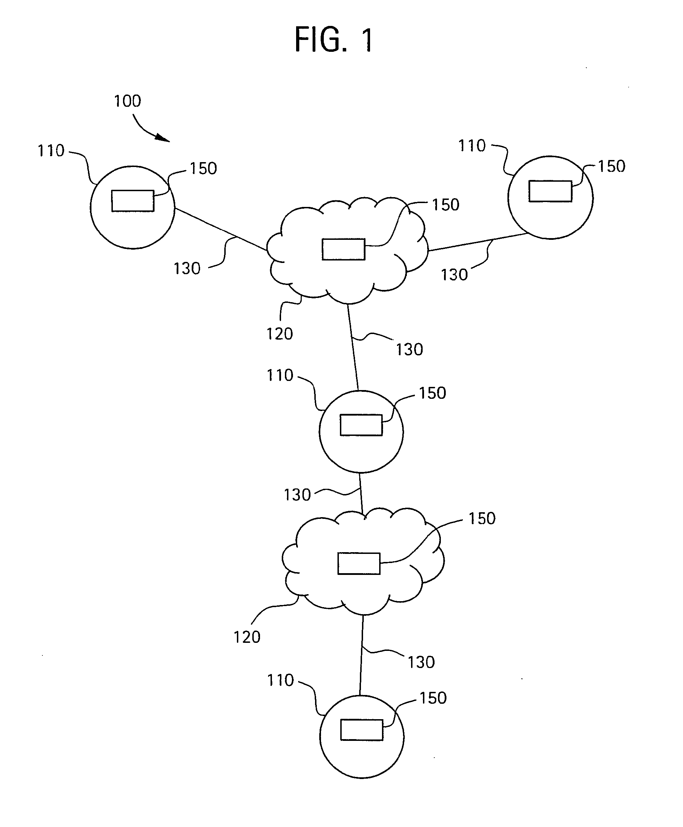

Fig. 1 illustrates a tactical communications network environment 100 operating with an embodiment of the presently described technology. The network environment 100 includes a plurality of communication nodes 110, one or more networks 120, one or more links 130 connecting the nodes and network(s), and one or more communication systems 150 facilitating communication over the components of the network environment 100. The following discussion assumes a network environment 100 including more than one network 120 and more than one link 130, but it should be understood that other environments are possible and anticipated.

Communication nodes 110 may be and/or include radios, transmitters, satellites, receivers, workstations, servers, and/or other computing or processing devices, for example. Network(s) 120 may be hardware and/or software for transmitting data between nodes 110, for example. Network(s) 120 may include one or more nodes 110, for example. Link(s) 130 may be wired and/or wireless connections to allow transmissions between nodes 110 and/or network(s) 120.

The communications system 150 may include software, firmware, and/or hardware used to facilitate data transmission among the nodes 110, networks 120, and links 130, for example. As illustrated in Fig. 1, communications system 150 may be implemented with respect to the nodes 110, network(s) 120, and/or links 130. In certain embodiments, every node 110 includes a communications system 150. In certain embodiments, one or more nodes 110 include a communications system 150. In certain embodiments, one or more nodes 110 may not include a communications system 150.

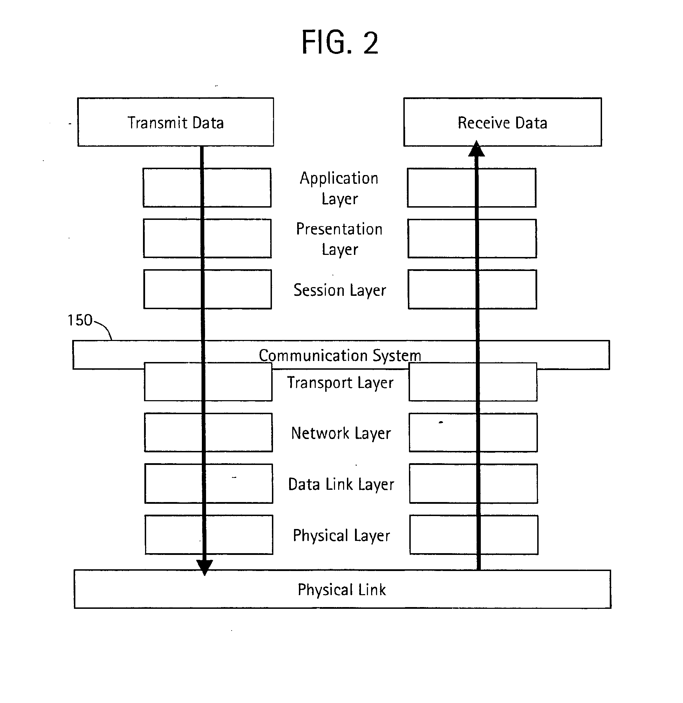

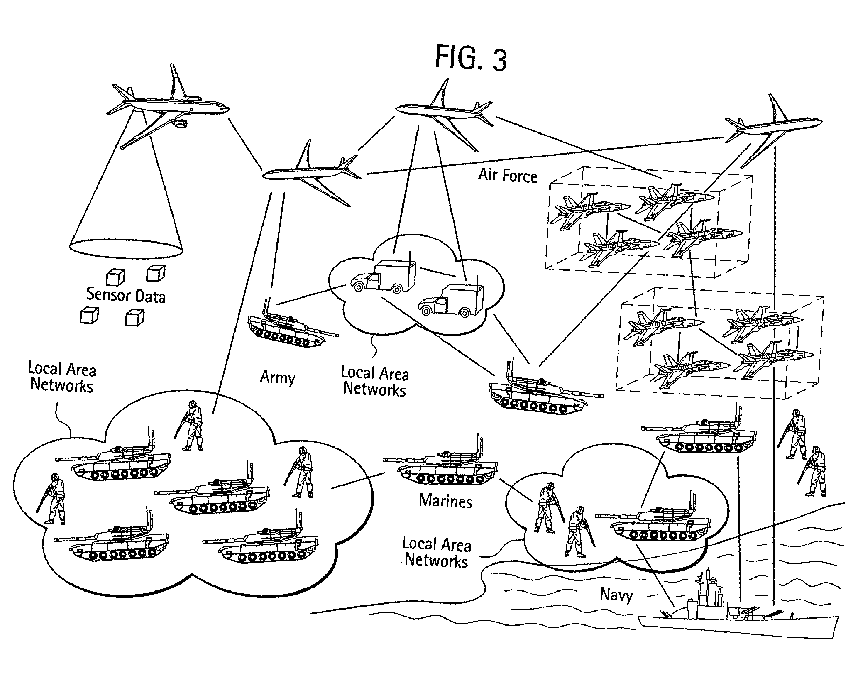

The communication system 150 provides dynamic management of data to help assure communications on a tactical communications network, such as the network environment 100. As shown in Fig. 2, in certain embodiments, the system 150 operates at the top of the transport layer in the OSI seven layer protocol model. The system 150 may give precedence to higher priority data in the tactical network passed to the transport layer, for example. The system 150 may be used to facilitate communications in a single network, such as a local area network (LAN) or wide area network (WAN), or across multiple networks. An example of a multiple network system is shown in Fig. 3. The system 150 may be used to manage available bandwidth rather than add additional bandwidth to the network, for example.

In certain embodiments, the system 150 is a software system, although the system 150 may include both hardware and software components in various embodiments. The system 150 may be network hardware independent, for example. That is, the system 150 may be adapted to function on a variety of hardware and software platforms. In certain embodiments, the system 150 operates on the edge of the network rather than on nodes in the interior of the network. However, the system 150 may operate in the interior of the network as well, such as at "choke points" in the network.

The system 150 may use rules and modes or profiles to perform throughput management functions such as optimizing available bandwidth, setting information priority, and managing data links in the network. By "optimizing" bandwidth, it is meant, for example, that the presently described technology may be employed to increase an efficiency of bandwidth use to communicate data in one or more networks. Optimizing bandwidth usage may include removing functionally redundant messages, message stream management or sequencing, and message compression, for example. Setting information priority may include differentiating message types at a finer granularity than Internet Protocol (IP) based techniques and sequencing messages onto a data stream via a selected rule-based sequencing algorithm, for example. Data link management may include rule-based analysis of network measurements to affect changes in rules, modes, and/or data transports, for example. A mode or profile may include a set of rules related to the operational needs for a particular network state of health or condition. The system 150 provides dynamic, "on-the-fly" reconfiguration of modes, including defining and switching to new modes on the fly.

The communication system 150 may be configured to accommodate changing priorities and grades of service, for example, in a volatile, bandwidth- limited network. The system 150 may be configured to manage information for improved data flow to help increase response capabilities in the network and reduce communications latency. Additionally, the system 150 may provide interoperability via a flexible architecture that is upgradeable and scalable to improve availability, survivability, and reliability of communications. The system 150 supports a data communications architecture that may be autonomously adaptable to dynamically changing environments while using predefined and predictable system resources and bandwidth, for example.

In certain embodiments, the system 150 provides throughput management to bandwidth-constrained tactical communications networks while remaining transparent to applications using the network. The system 150 provides throughput management across multiple users and environments at reduced complexity to the network. As mentioned above, in certain embodiments, the system 150 runs on a host node at the top of layer four (the transport layer) of the OSI seven layer model and does not require specialized network hardware. The system 150 may operate transparently to the layer four interface. That is, an application may utilize a standard interface for the transport layer and be unaware of the operation of the system 150. For example, when an application opens a socket, the system 150 may filter data at this point in the protocol stack. The system 150 achieves transparency by allowing applications to use, for example, the TCP/IP socket interface that is provided by an operating system at a communication device on the network rather than an interface specific to the system 150. System 150 rules may be written in extensible markup language (XML) and/or provided via custom dynamic link libraries (DLLs), for example.

In certain embodiments, the system 150 provides quality of service (QoS) on the edge of the network. The system's QoS capability offers content-based, rule-based data prioritization on the edge of the network, for example. Prioritization may include differentiation and/or sequencing, for example. The system 150 may differentiate messages into queues based on user-configurable differentiation rules, for example. The messages are sequenced into a data stream in an order dictated by the user-configured sequencing rule (e.g., starvation, round robin, relative frequency, etc.). Using QoS on the edge, data messages that are indistinguishable by traditional QoS approaches may be differentiated based on message content, for example. Rules may be implemented in XML, for example. In certain embodiments, to accommodate capabilities beyond XML and/or to support extremely low latency requirements, the system 150 allows dynamic link libraries to be provided with custom code, for example.

Inbound and/or outbound data on the network may be customized via the system 150. Prioritization protects client applications from high-volume, low-priority data, for example. The system 150 helps to ensure that applications receive data to support a particular operational scenario or constraint.

In certain embodiments, when a host is connected to a LAN that includes a router as an interface to a bandwidth-constrained tactical network, the system may operate in a configuration known as QoS by proxy. In this configuration, packets that are bound for the local LAN bypass the system and immediately go to the LAN. The system applies QoS on the edge of the network to packets bound for the bandwidth-constrained tactical link.

In certain embodiments, the system 150 offers dynamic support for multiple operational scenarios and/or network environments via commanded profile switching. A profile may include a name or other identifier that allows the user or system to change to the named profile. A profile may also include one or more identifiers, such as a functional redundancy rule identifier, a differentiation rule identifier, an archival interface identifier, a sequencing rule identifier, a pre-transmit interface identifier, a post-transmit interface identifier, a transport identifier, and/or other identifier, for example. A functional redundancy rule identifier specifies a rule that detects functional redundancy, such as from stale data or substantially similar data, for example. A differentiation rule identifier specifies a rule that differentiates messages into queues for processing, for example. An archival interface identifier specifies an interface to an archival system, for example. A sequencing rule identifier identifies a sequencing algorithm that controls samples of queue fronts and, therefore, the sequencing of the data on the data stream. A pre-transmit interface identifier specifies the interface for pre-transmit processing, which provides for special processing such as encryption and compression, for example. A post-transmit interface identifier identifies an interface for post-transmit processing, which provides for processing such as de-encryption and decompression, for example. A transport identifier specifies a network interface for the selected transport.

A profile may also include other information, such as queue sizing information, for example. Queue sizing information identifiers a number of queues and amount of memory and secondary storage dedicated to each queue, for example.

In certain embodiments, the system 150 provides a rules-based approach for optimizing bandwidth. For example, the system 150 may employ queue selection rules to differentiate messages into message queues so that messages may be assigned a priority and an appropriate relative frequency on the data stream. The system 150 may use functional redundancy rules to manage functionally redundant messages. A message is functionally redundant if it is not different enough (as defined by the rule) from a previous message that has not yet been sent on the network, for example. That is, if a new message is provided that is not sufficiently different from an older message that has already been scheduled to be sent, but has not yet been sent, the newer message may be dropped, since the older message will carry functionally equivalent information and is further ahead in the queue. In addition, functional redundancy many include actual duplicate messages and newer messages that arrive before an older message has been sent. For example, a node may receive identical copies of a particular message due to characteristics of the underlying network, such as a message that was sent by two different paths for fault tolerance reasons. As another example, a new message may contain data that supersedes an older message that has not yet been sent. In this situation, the system 150 may drop the older message and send only the new message. The system 150 may also include priority sequencing rules to determine a priority-based message sequence of the data stream. Additionally, the system 150 may include transmission processing rules to provide pre-transmission and post-transmission special processing, such as compression and/or encryption.

In certain embodiments, the system 150 provides fault tolerance capability to help protect data integrity and reliability. For example, the system 150 may use user-defined queue selection rules to differentiate messages into queues. The queues are sized according to a user-defined configuration, for example. The configuration specifies a maximum amount of memory a queue may consume, for example. Additionally, the configuration may allow the user to specify a location and amount of secondary storage that may be used for queue overflow. After the memory in the queues is filled, messages may be queued in secondary storage. When the secondary storage is also full, the system 150 may remove the oldest message in the queue, logs an error message, and queues the newest message. If archiving is enabled for the operational mode, then the de-queued message may be archived with an indicator that the message was not sent on the network.

Memory and secondary storage for queues in the system 150 may be configured on a per-link basis for a specific application, for example. A longer time between periods of network availability may correspond to more memory and secondary storage to support network outages. The system 150 may be integrated with network modeling and simulation applications, for example, to help identify sizing to help ensure that queues are sized appropriately and time between outages is sufficient to help achieve steady-state and help avoid eventual queue overflow.

Furthermore, in certain embodiments, the system 150 offers the capability to meter inbound ("shaping") and outbound ("policing") data. Policing and shaping capabilities help address mismatches in timing in the network. Shaping helps to prevent network buffers form flooding with high-priority data queued up behind lower-priority data. Policing helps to prevent application data consumers from being overrun by low-priority data. Policing and shaping are governed by two parameters: effective link speed and link proportion. The system 150 may form a data stream that is no more than the effective link speed multiplied by the link proportion, for example. The parameters may be modified dynamically as the network changes. The system may also provide access to detected link speed to support application level decisions on data metering. Information provided by the system 150 may be combined with other network operations information to help decide what link speed is appropriate for a given network scenario.

In certain embodiments, QoS may be provided to a communication network above the transport layer of the OSI protocol model. Specifically, QoS technology may be implemented just below the socket layer of a transport protocol connection. The transport protocol may include a Transmission Control Protocol (TCP), User Datagram Protocol (UDP), or Stream Control Transmission Protocol (SCTP), for example. As another example, the protocol type may include Internet Protocol (IP), Internetwork Packet Exchange (IPX), Ethernet, Asynchronous Transfer Mode (ATM), File Transfer Protocol (FTP), and/or Real-time Transport Protocol (RTP). For purposes of illustration, one or more examples will be provided using TCP.

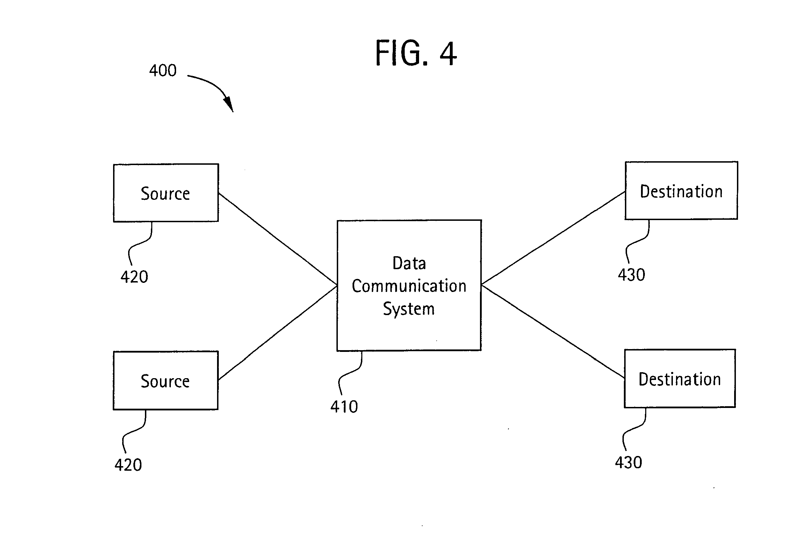

Fig. 4 illustrates a data communication environment 400 operating with an embodiment of the present invention. The environment 400 includes a data communication system 410, one or more source nodes 420, and one or more destination nodes 430. The data communication system 410 is in communication with the source node(s) 420 and the destination node(s) 430. The data communication system 410 may communicate with the source node(s) 420 and/or destination node(s) 430 over links, such as radio, satellite, network links, and/or through inter-process communication, for example. In certain embodiments, the data communication system 410 may communication with one or more source nodes 420 and/or destination nodes 430 over one or more tactical data networks.

The data communication system 410 may be similar to the communication system 150, described above, for example. In certain embodiments, the data communication system 410 is adapted to receive data from the one or more source nodes 420. In certain embodiments, the data communication system 410 may include one or more queues for holding, storing, organizing, and/or prioritizing the data. Alternatively, other data structures may be used for holding, storing, organizing, and/or prioritizing the data. For example, a table, tree, or linked list may be used. In certain embodiments, the data communication system 410 is adapted to communicate data to the one or more destination nodes 430.

The data received, stored, prioritized, processed, communicated, and/or otherwise transmitted by data communication system 410 may include a block of data. The block of data may be, for example, a packet, cell, frame, and/or stream of data. For example, the data communication system 410 may receive packets of data from a source node 420. As another example, the data communication system 410 may process a stream of data from a source node 420.

In certain embodiments, data includes a header and a payload. The header may include protocol information and time stamp information, for example. In certain embodiments, protocol information, time stamp information, content, and other information may be included in the payload. In certain embodiments, the data may or may not be contiguous in memory. That is, one or more portions of the data may be located in different regions of memory. In certain embodiments, data may include a pointer to another location containing data, for example.

Source node(s) 420 provide and/or generate, at least in part, data handled by the data communication system 410. A source node 420 may include, for example, an application, radio, satellite, or network. The source node 420 may communicate with the data communication system 410 over a link, as discussed above. Source node(s) 420 may generate a continuous stream of data or may burst data, for example. In certain embodiments, the source node 420 and the data communication system 410 are part of the same system. For example, the source node 420 may be an application running on the same computer system as the data communication system 410.

Destination node(s) 430 receive data handled by the data communication system 410. A destination node 430 may include, for example, an application, radio, satellite, or network. The destination node 430 may communicate with the data communication system 410 over a link, as discussed above. In certain embodiments, the destination node 430 and the data communication system 410 are part of the same system. For example, the destination node 430 may be an application running on the same computer system as the data communication system 410.

The data communication system 410 may communicate with one or more source nodes 420 and/or destination nodes 430 over links, as discussed above. In certain embodiments, the one or more links may be part of a tactical data network. In certain embodiments, one or more links may be bandwidth constrained. In certain embodiments, one or more links may be unreliable and/or intermittently disconnected. In certain embodiments, a transport protocol, such as TCP, opens a connection between sockets at a source node 420 and a destination node 430 to transmit data on a link from the source node 420 to the destination node 430.

In operation, data is provided and/or generated by one or more data sources 420. The data is received at the data communication system 410. The data may be received over one or more links, for example. For example, data may be received at the data communication system 410 from a radio over a tactical data network. As another example, data may be provided to the data communication system 410 by an application running on the same system by an inter-process communication mechanism. As discussed above, the data may be a block of data, for example.

In certain embodiments, the data communication system 410 may organize and/or prioritize the data. In certain embodiments, the data communication system 410 may determine a priority for a block of data. For example, when a block of data is received by the data communication system 410, a prioritization component of the data communication system 410 may determine a priority for that block of data. As another example, a block of data may be stored in a queue in the data communication system 410 and a prioritization component may extract the block of data from the queue based on a priority determined for the block of data and/or for the queue.

The prioritization of the data by the data communication system 410 may be used to provide QoS, for example. For example, the data communication system 410 may determine a priority for a data received over a tactical data network. The priority may be based on the source address of the data, for example. For example, a source IP address for the data from a radio of a member of the same platoon as the platoon the data communication system 410 belongs to may be given a higher priority than data originating from a unit in a different division in a different area of operations. The priority may be used to determine which of a plurality of queues the data should be placed into for subsequent communication by the data communication system 410. For example, higher priority data may be placed in a queue intended to hold higher priority data, and in turn, the data communication system 410, in determining what data to next communicate may look first to the higher priority queue.

The data may be prioritized based at least in part on one or more rules. As discussed above, the rules may be user defined. In certain embodiments, rules may be written in extensible markup language ("XML") and/or provided via custom dynamically linked libraries ("DLLs"), for example. Rules may be used to differentiate and/or sequence data on a network, for example. A rule may specify, for example, that data received using one protocol be favored over data utilizing another protocol. For example, command data may utilize a particular protocol that is given priority, via a rule, over position telemetry data sent using another protocol. As another example, a rule may specify that position telemetry data coming from a first range of addresses may be given priority over position telemetry data coming from a second range of addresses. The first range of addresses may represent IP addresses of other aircraft in the same squadron as the aircraft with the data communication system 410 running on it, for example. The second range of addresses may then represent, for example, IP addresses for other aircraft that are in a different area of operations, and therefore of less interest to the aircraft on which the data communication system 410 is running.

In certain embodiments, the data communication system 410 does not drop data. That is, although data may be low priority, it is not dropped by the data communication system 410. Rather, the data may be delayed for a period of time, potentially dependent on the amount of higher priority data that is received. In certain embodiments, data may be queued or otherwise stored, for example, to help ensure that the data is not lost or dropped until bandwidth is available to send the data.

In certain embodiments, the data communication system 410 includes a mode or profile indicator. The mode indicator may represent the current mode or state of the data communication system 410, for example. As discussed above, the data communications system 410 may use rules and modes or profiles to perform throughput management functions such as optimizing available bandwidth, setting information priority, and managing data links in the network. The different modes may affect changes in rules, modes, and/or data transports, for example. A mode or profile may include a set of rules related to the operational needs for a particular network state of health or condition. For example, different modes may have different rules associated with them. That is, one set of rules may be utilized in mode A, and a different, although potentially overlapping, set of rules may be utilized in mode B. A mode or profile may include a set of rules related to the operational needs for a particular network state of health or condition. In certain embodiments, a rule selected to be applied to data and/or communication may be selected based at least in part on the mode or profile. The data communication system 410 may provide dynamic reconfiguration of modes, including defining and switching to new modes "on-the-fly," for example.

In certain embodiments, the data communication system 410 is transparent to other applications. For example, the processing, organizing, and/or prioritization performed by the data communication system 410 may be transparent to one or more source nodes 420 or other applications or data sources. For example, an application running on the same system as data communication system 410, or on a source node 420 connected to the data communication system 410, may be unaware of the prioritization of data performed by the data communication system 410.

Data is communicated via the data communication system 410. The data may be communicated to one or more destination nodes 430, for example. The data may be communicated over one or more links, for example. For example, the data may be communicated by the data communication system 410 over a tactical data network to a radio. As another example, data may be provided by the data communication system 410 to an application running on the same system by an inter-process communication mechanism.

As discussed above, the components, elements, and/or functionality of the data communication system 410 may be implemented alone or in combination in various forms in hardware, firmware, and/or as a set of instructions in software, for example. Certain embodiments may be provided as a set of instructions residing on a computer-readable medium, such as a memory, hard disk, DVD, or CD, for execution on a general purpose computer or other processing device.

In certain embodiments, data may be communicated via a communication connection having a limited bandwidth and/or availability for data transport. Such a connection may implement rules regarding data selection, update frequency, congestion control and/or prioritization, for example. Variability in rules and/or format may help efficiency in communication via the connection. Such rules, format and/or other parameters may be specified in a mode or profile, for example. The mode/profile may be generated automatically by software in the communications system, may be generated by an administrator or technician, may be generated by a user, and/or may be provided as a default, for example. In certain embodiments, the mode/profile may be modified by software, administrator, and/or user, for example.

In certain embodiments, links between nodes in the system are managed (e.g., dynamically managed) based on a mode or profile. A mode includes a collection of rules and configuration information for controlling data propagation to and from the transport layer on a network link, for example. The communication system detects the network health (e.g., available bandwidth, data traffic, buffer flooding, etc.) and dynamically commands the system to operate in an appropriate mode. Additionally, as the operational scenario changes, the communication system may be commanded to change the mode. The system may be manually and/or automatically commanded to change the mode. The mode specifies throughput management rules, archival configuration, pre- and post-transmission rules, and/or transport selection, for example. Thus, transparent link management may be enabled at the presentation and session layers of the OSI protocol stack, for example.

In certain embodiments, a profile and/or other representation provides a description of an operational scenario or mode within which a communication system may operate. The communication system may switch into one or more different modes based on operating circumstances for the communication system. For example, if communication system users are on the attack, the system may operate in an attack mode. If users are retreating, the system may operate in a retreat mode. If users are on patrol, the system may operate in a patrol mode. Different data may have different priorities in different modes. Different networks may have different characteristics for different modes. Thus, the system may be placed in a particular mode based on operating conditions and/or objectives, for example.

In certain embodiments, a command, such as a single command, may be used to place the communication system in a particular mode. The command may be executed manually and/or automatically to place the communication system in a certain mode, for example. A different command may correspond to a different mode, for example. A single command, for example, may change a plurality of characteristics or parameters of the system. Characteristics or parameters may include selection rules, functional redundancy rules, archiving capability, sequencing rules, pre-transmission rules and/or link characteristics, for example. Thus, a situation may be translated into a context that includes a plurality of parameters/settings "wrapped" or incorporated into the context. In certain embodiments, an application programming interface may be implemented to allow mode-based communication capability to be integrated with network operation software and/or other high-level decision-making software. In certain embodiments, a command used to switch modes may be a voice command, for example.

For example, a fighter plane may be far apart from another fighter plane, resulting in decreased signal strength, or weather may cause a bandwidth of a communications link between the planes to change. As the bandwidth deteriorates between the planes, network operation software running on the fighter planes instructs the communication system to switch to a different mode, such as a lower bandwidth mode that keeps high priority data flowing across the communication link more effectively.

In certain embodiments, a profile provides parameters for a mode in an XML file or XML section of a configuration file that defines the mode. A mode may be defined by one or more XML elements, and the communications system may be instructed to select an existing XML mode or XML element and/or a new XML mode may be added and selected dynamically, for example. In certain embodiments, a mode-based communication system may react dynamically to change an existing mode and/or add a new mode and switch to the new mode based on communication conditions, for example. In certain embodiments, a publish and subscribe system may be used to "publish" XML mode documents to one or more servers to be made available for use in communication. Alternatively, one or more DLLs may specify profiles and/or corresponding modes.

Certain embodiments provide for segmenting and reassembling data being sent over a network. Certain embodiments provide a method and system for incorporating segmentation and reassembly capabilities into QoS technology implemented above the transport layer. Data sent over the network is processed by QoS and segmented into 64 byte packets before being pushed down to the transport layer. Peer QoS technology on the receiving end reassembles the packets in to the original, larger size data stream.

Certain embodiments provide segmentation and reassembly above the transport layer as part of QoS providing bandwidth sharing benefits to constrained networks. This solution is network agnostic due to its location above the transport layer and may be deployed on many different networks.

For example, data to be transmitted may be enqueued or otherwise held for processing prior to transmission from a source node. If a relatively large packet or block of data is being sent with low priority, the large block may occupy a lengthy transmit time on a slow link. As the large, lower priority data packet is being transmitting, high priority data may be held up otherwise delayed by the lower priority data. Even prioritization based on priority and/or separate "high priority" and "low priority" queues may not completely alleviate communication slowdown from transmission of large packets.

Therefore, a large data packet may be segmented or "broken up" into smaller packets above the transport layer, for example. The smaller packets are transmitted and reassembled at a destination node. For example, an application on the receiving end may put the segmented data packets back together into a larger packet that the destination node expects. Thus, applications above layer 5 (transport layer) of the OSI protocol stack, for example, are unaware of the data packet segmentation.

Data packets may be segmented or "broken up" into a variety of sizes based operating conditions and/or constraints, user preference, available bandwidth, operating system characteristics and/or other criteria, for example. In an embodiment, data packets are segmented into 64 byte packets. In certain embodiments, a user may specify and/or adjust at what granularity data packets should be segmented.

By sending small data packets, if high priority data is to be sent during transmission of low priority data, transmission of the low priority data may be suspended while the high priority is transmitted. After the high priority data has been sent, the communication system may resume sending the low priority.

For example, a battlefield commander may decide whether or not to send a large video packet based on a particular situation because megabit video may slow the communication network. By segmenting large data packets, high priority messages, such as telling a convoy to stop because a scout has seen an IED, may be interleaved with lower priority traffic and may attain priority in transmission among even a larger low priority file. Data segmentation and reassembly may occur transparent to user and user equipment, while enabling data to be more effectively transmitted.

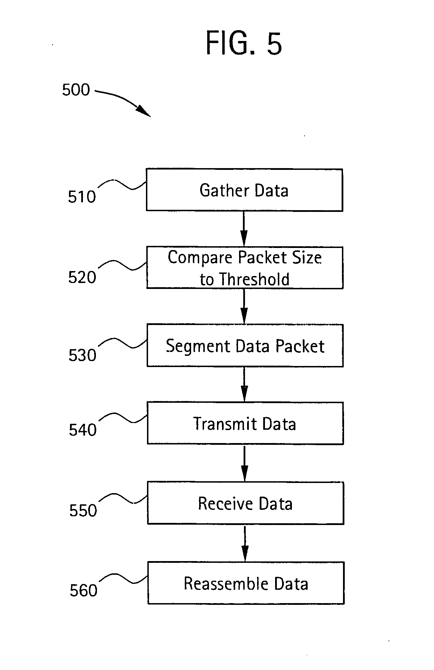

Fig. 5 illustrates a flow diagram for a method 500 for communicating data in accordance with an embodiment of the present invention. The method 500 includes the following steps, which will be described below in more detail. At step 510, data to be transmitted is received at a communication system. At step 520, data packet size is compared to a data packet size threshold. At step 530, the data packet is segmented according to the data packet size threshold. At step 540, the segmented data packet is transmitted. At step 550, the segmented data packet is received at a destination. At step 560, related segmented data packets are reassembled into the larger data packet. The method 500 is described with reference to elements of systems described above, but it should be understood that other implementations are possible.

At step 510, data to be transmitted via the network is received at a data communication system. Data may include a variety of content organized in one or more packets. A data message may include one or more data packets intended for a destination node.

At step 520, data packet size is compared to a data packet size threshold or criterion. For example, a 256 byte packet is compared to a 64 byte packet size threshold. If the packet size is larger than the criterion, the packet will be segmented into a plurality of smaller segmented packets. If the data packet size is less than the criterion, then the packet may not be segmented. At step 530, the data packet is segmented according to the data packet size threshold. For example, the 256 byte packet is segmented into four 64 byte segmented data packets. In certain embodiments, segmentation may occur at layers 3 and/or 4 of the OSI protocol model, for example.

At step 540, the segmented data packet is transmitted. For example, the four 64 byte segmented data packets are transmitted to a destination node. The segmented data packets may be transmitted continuously and/or may be interleaved with other data packets from other messages. Data packets may be transmitted according to priority. For example, quality of service prioritizations and/or optimizations may be performed to prioritize and organize data packets for transmission. Thus, for example, a large, low priority data packet may be segmented into a plurality of smaller, low priority segmented data packets and interleaved in transmission with higher priority data packets. Alternatively and/or in addition, a higher priority data packet may interrupt transmission of a stream of lower priority segmented data packets. After the higher priority packet(s) have been transmitted, the lower priority segmented data packets may resume transmission, for example. In certain embodiments, segmented and/or non-segmented packets may be interleaved in transmission.

One or more data packets for data messages may be enqueued during communication in order to prioritize and/or otherwise process the message(s) based on one or more rules and/or criteria, which may be dependent upon mode. Message(s) may be enqueued in the order in which they were received and/or in an alternate order, for example. In certain embodiments, messages may be stored in one or more queues. The one or more queues may be assigned differing priorities and/or differing processing rules, for example. The differing priorities and/or rules may be based upon mode, for example. Messages in the queues may be prioritized and/or otherwise processed based at least in part on operating mode, for example.

For example, the communication system may determine a priority for a message received over a tactical communication network. The priority may be based on the source address of the message, for example. For example, a source IP address for the message from a radio of a member of the same platoon as the platoon the communication system belongs to may be given a higher priority than a message originating from a unit in a different division in a different area of operations. The priority may be used to determine which of a plurality of queues the message should be placed into for subsequent communication. For example, higher priority data may be placed in a queue intended to hold higher priority data, and in turn, the communication system, in determining what data to next communicate, may look first to the higher priority queue.

In certain embodiments, a mode or profile indicator may represent the current mode or state of the communication system, for example. As discussed above, the rules and modes or profiles may be used to perform throughput management functions such as optimizing available bandwidth, setting information priority, and managing data links in the network. The different modes may affect changes in rules, modes, and/or data transports, for example. A mode or profile may include a set of rules related to the operational needs for a particular network state of health or condition. The communication system may provide dynamic reconfiguration of modes, including defining and switching to new modes "on-the-fly," for example.

In certain embodiments, the prioritization of messages is transparent to other applications. For example, the processing, organizing, and/or prioritization performed by the communication system may be transparent to one or more source nodes or other applications or data sources. For example, an application running on the same system as a communication system, or on a source node connected to the communication system, may be unaware of the prioritization of messages performed by the communication system.

At step 550, the segmented data packet is received at a destination. For example, a destination node and/or data communication subsystem related to the destination node receives one or more segmented data packets. At step 560, related segmented data packets are reassembled into the larger data packet. For example, segmented data packets may include an identifier allowing the segmented packets to be reassembled into the original, larger data packet. Thus, an application at the destination node expecting the larger data packet may be unaware that the packet was segmented for transmission. An application may then process and/or otherwise use the larger data packet.

One or more of the steps of the method 500 may be implemented alone or in combination in hardware, firmware, and/or as a set of instructions in software, for example. Certain embodiments may be provided as a set of instructions residing on a computer-readable medium, such as a memory, hard disk, DVD, or CD, for execution on a general purpose computer or other processing device.

Certain embodiments of the present invention may omit one or more of these steps and/or perform the steps in a different order than the order listed. For example, some steps may not be performed in certain embodiments of the present invention. As a further example, certain steps may be performed in a different temporal order, including simultaneously, than listed above.

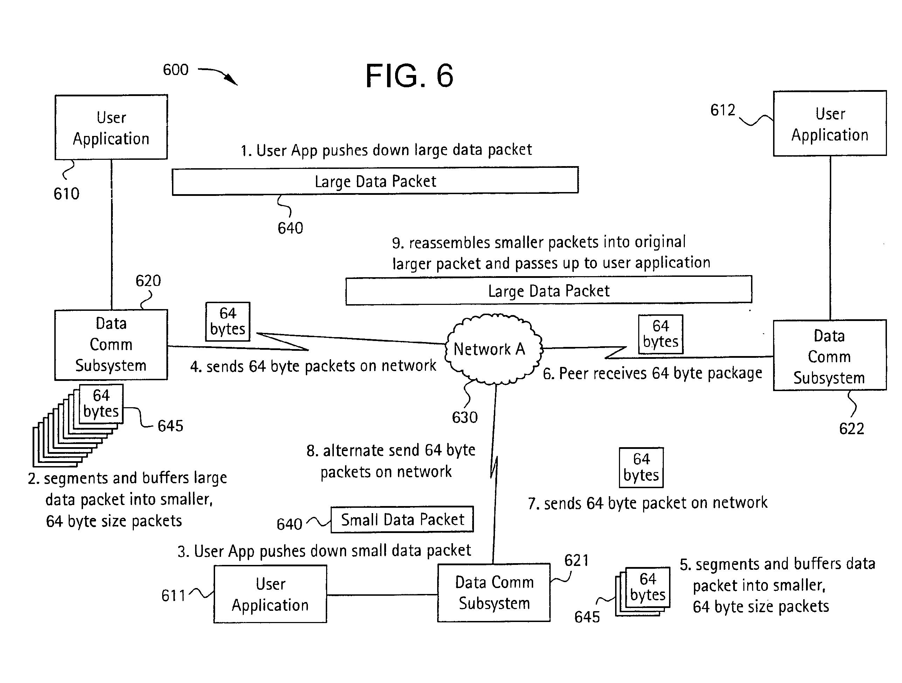

Fig. 6 illustrates a data communication system 600 with segmentation and reassembly capability in accordance with an embodiment of the present invention. The system 600 includes a plurality of user applications 610-612, data communication subsystems 620-622, and a network 630. The network 630 allows the data communication subsystems 620-622 to route data packets between user applications 610-612. As shown in Fig. 6, user application 610, for example, pushes down a large data packet 640 to data communication subsystem 620 for transmission. The data communication subsystem 620 receives the large data packet 640 and segments and buffers the large data packet 640 into a plurality of smaller segmented data packets 645. For example, the large data packet 640 is segmented into a plurality of 64 byte segmented data packets.

User application 611, for example, pushes down a small data packet 650 to data communication subsystem 621 for transmission. If the small data packet 650 is larger than a packet size criterion or threshold, the small data packet 650 may also be segmented and buffered into a plurality of smaller segmented data packets 655, such as a plurality of 64 byte segmented data packets.

Data communication subsystems 620 and 621 transmit segmented data packets 645 and 655 on the network 630. The subsystems 620, 621 may alternate transmission of segmented data packets 645, 655 based on priority or other transmission rules to provide quality of service on the network, for example.

Data communication subsystem 622 receives segmented data packets 645, 655, for example. The data communication subsystem 622 reassembles the smaller, segmented data packets 645, 655 into original data packets 640, 650 for relay to the user application 612. Thus, the user application 612 receives expected data packets 640, 650, for example.

Thus, certain embodiments of the present invention provide systems and methods for data transmission on a bandwidth-constrained or other network. Certain embodiments provide segmentation and reassembly of data packets to allow a lower-priority data transfer to be interrupted to provide for transmission of higher-priority data and then resumed without a TCP timeout and/or other constraints, for example. Certain embodiments allow data packets to be segmented and interleaved for transmission and reassembly at a destination. Certain embodiments provide a technical effect of data packet segmentation, transmission and reassembly according to at least one data packet size criterion.

Certain embodiments provide profile and/or mode-driven communication link management. Certain embodiments provide a technical effect of defining profiles including one or more modes and allowing switching between one or more profiles depending upon a criterion, such as purpose or operating environment. Thus, certain embodiments place an abstraction between the data and the link allowing the transport of bits without regard to the kind of data being transported. Certain embodiments allow flexible link configuration for throughput management, transmission processing, archival configuration, and transport selection via a single mode-switch command. Automatic mode-switching provides dynamic reactions to network health. Certain embodiments provide support for multiple operational scenarios via commanded mode-switching. Certain embodiments provide various modes specifying throughput management rules, archival configuration, pre- and post- transmission rules, and transport selection, for example. Certain embodiments enable transparent link management above the transport layer, for example.

## Claims

1. A method for data communication via a network, said method comprising:
receiving a first data packet for transmission;
comparing a size of said first data packet to a data packet size criterion;
segmenting said first data packet to produce a plurality of segmented data packets when said size of said first data packet does not satisfy said data packet size criterion;
transmitting said plurality of segmented data packets to a transport layer of a network communications protocol stack; and
reassembling said plurality of segmented data packets into said first data packet for delivery to an application and wherein said reassembling step occurs at a second node remote from said first node
**characterized in that** said receiving, comparing, segmenting, and transmitting steps occur above said transport layer of said network communications protocol stack at a first node.

2. The method of claim 1, wherein said transmitting step further comprises interleaving transmission of said plurality of segmented data packets with transmission of a least one segment of a second data packet.

3. The method of claim 2, further comprising prioritizing said plurality of segmented data packets to be communicated via said network based on a mode, and wherein said interleaving is based at least in part on said mode, wherein said mode represents at least one of a condition of the network and an operating circumstance of said first node.

4. A data communication system providing quality of service over a network, said system comprising:
a first data communication subsystem receiving a first data packet for transmission to a transport layer of a network communications protocol stack, said data communication subsystem segmenting said first data packet into a plurality of segmented data packets based on a data packet size threshold; and
a second data communication subsystem receiving said plurality of segmented data packets, said second data communication subsystem reassembling said plurality of segmented data packets into said first data packet for delivery to an application wherein said second data communication subsystem is at a second node remote from said first node
**characterized in that** said first data communication subsystem is above said transport layer of said network communications protocol stack at a first node.

5. The system of claim 4, wherein said second data communication subsystem reassembles said plurality of segmented data packets into said first data packet based on an identifier associated with each of said plurality of segmented data packets.

6. A computer-readable medium having a set of instructions for execution on a processing device, said set of instructions comprising:
a segmentation routine for comparing a size of a first data packet to a data packet size criterion and segmenting said first data packet to produce a plurality of segmented data packets when said size of said first data packet exceeds said data packet size criterion;
a transmission routine for transmitting said plurality of segmented data packets to a transport layer of a network communications protocol stack; and
a reassembly routine for reassembling said plurality of segmented data packets into said first data packet wherein said reassembly routine is at a second node remote from said first node
**characterized in that** said segmentation routine and said transmission routine are above said transport layer of said network communications protocol stack at a first node.

## Patentansprüche

1. Verfahren zur Datenkommunikation über ein Netzwerk, wobei das Verfahren aufweist:
Empfangen eines ersten Datenpakets zur Übertragung;
Vergleichen einer Größe des ersten Datenpakets mit einem Datenpaketgrößen-Kriterium;
Segmentieren des ersten Datenpakets, um eine Vielzahl von segmentierten Datenpaketen zu erzeugen, wenn die Größe des ersten Datenpakets das Datenpaketgrößen-Kriterium nicht erfüllt;
Übertragen der Vielzahl von segmentierten Datenpaketen zu einer Transportschicht eines Netzwerkkommunikations-Protokollstapels; und
Wiederzusammensetzen der Vielzahl von segmentierten Datenpaketen zu dem ersten Datenpaket zur Lieferung an eine Applikation und wobei der Wiederzusammensetzungsschritt an einem zweiten Knoten entfernt von dem ersten Knoten erfolgt,
**dadurch gekennzeichnet, dass** die Empfangs-, Vergleichs-, Segmentierungs- und Übertragungsschritte oberhalb der Transportschicht des Netzwerkkommunikations-Protokollstapels an einem ersten Knoten erfolgen.

2. Verfahren nach Anspruch 1, bei dem der Übertragungsschritt ferner ein Verschachteln einer Übertragung der Vielzahl von segmentierten Datenpaketen mit einer Übertragung zumindest eines Segments eines zweiten Datenpakets aufweist.

3. Verfahren nach Anspruch 2, ferner aufweisend ein Priorisieren der Vielzahl von segmentierten Datenpaketen, die über das Netzwerk kommuniziert werden sollen, beruhend auf einem Modus, und wobei das Verschachteln teilweise auf dem Modus beruht, wobei der Modus einen Zustand des Netzwerks und/oder einen Betriebsumstand des ersten Knotens darstellt.

4. Datenkommunikationssystem, das eine Dienstgüte über ein Netzwerk bereitstellt, wobei das System aufweist:
ein erstes Datenkommunikationsuntersystem, das ein erstes Datenpaket zur Übertragung zu einer Transportschicht eines Netzwerkkommunikations-Protokollstapels empfängt, wobei das Datenkommunikationsuntersystem das erste Datenpaket beruhend auf einem Datenpaketgrößen-Schwellwert in eine Vielzahl von segmentierten Datenpaketen segmentiert; und
ein zweites Datenkommunikationsuntersystem, das die Vielzahl von segmentierten Datenpaketen empfängt, wobei das zweite Datenkommunikationsuntersystem die Vielzahl von segmentierten Datenpaketen wieder zu dem ersten Datenpaket zur Lieferung an eine Applikation zusammensetzt, wobei sich das zweite Datenkommunikationsuntersystem an einem zweiten Knoten entfernt von dem ersten Knoten befindet,
**dadurch gekennzeichnet, dass** sich das erste Datenkommunikationsuntersystem oberhalb der Transportschicht des Netzwerkkommunikations-Protokollstapels an einem ersten Knoten befindet.

5. System nach Anspruch 4, bei dem das zweite Datenkommunikationsuntersystem die Vielzahl von segmentierten Datenpaketen wieder zu dem ersten Datenpaket zusammensetzt, und zwar beruhend auf einer Kennung, die jedem aus der Vielzahl von segmentierten Datenpaketen zugeordnet ist.

6. Computerlesbares Medium mit einem Befehlssatz zur Ausführung auf einer Verarbeitungsvorrichtung, wobei der Befehlssatz aufweist:
eine Segmentierungsroutine zum Vergleichen einer Größe eines ersten Datenpakets mit einem Datenpaketgrößen-Kriterium und zum Segmentieren des ersten Datenpakets, um eine Vielzahl von segmentierten Datenpaketen zu erzeugen, wenn die Größe des ersten Datenpakets das Datenpaketgrößen-Kriterium überschreitet;
eine Übertragungsroutine zum Übertragen der Vielzahl von segmentierten Datenpaketen zu einer Transportschicht eines Netzwerkkommunikations-Protokollstapels; und
eine Wiederzusammensetzungsroutine zum Wiederzusammensetzen der Vielzahl von segmentierten Datenpaketen zu dem ersten Datenpaket, wobei sich die Wiederzusammensetzungsroutine an einem zweiten Knoten entfernt von dem ersten Knoten befindet,
**dadurch gekennzeichnet, dass** sich die Segmentierungsroutine und die Übertragungsroutine oberhalb der Transportschicht des Netzwerkkommunikations-Protokollstapels an einem ersten Knoten befinden.

## Revendications

1. Procédé de communication de données par l'intermédiaire d'un réseau, ledit procédé comprenant:
la réception d'un premier paquet de données pour transmission;
la comparaison d'une taille dudit premier paquet de données à un critère de taille de paquet de données;
la segmentation dudit premier paquet de données pour produire une pluralité de paquets de données segmentés lorsque ladite taille dudit premier paquet de données ne satisfait pas audit critère de taille de paquet de données;
la transmission de ladite pluralité de paquets de données segmentés jusqu'à une couche de transport d'une pile de protocoles de communications en réseau; et
le réassemblage de ladite pluralité de paquets de données segmentés en ledit premier paquet de données pour délivrance à une application et dans lequel ladite étape de réassemblage est exécutée au niveau d'un deuxième noeud distant dudit premier noeud
**caractérisé en ce que** lesdites étapes de réception, de comparaison, de segmentation et de transmission sont exécutées au-dessus de ladite couche de transport de ladite pile de protocoles de communications en réseau au niveau d'un premier noeud.

2. Procédé selon la revendication 1, dans lequel ladite étape de transmission comprend en outre l'entrelacement de la transmission de ladite pluralité de paquets de données segmentés avec la transmission d'au moins un segment d'un deuxième paquet de données.

3. Procédé selon la revendication 2, comprenant en outre la priorisation de ladite pluralité de paquets de données segmentés devant être communiqués par l'intermédiaire dudit réseau sur la base d'un mode, et dans lequel ledit entrelacement est basé au moins en partie sur ledit mode, dans lequel ledit mode représente au moins l'un d'un état du réseau et d'une circonstance opérationnelle dudit premier noeud.

4. Système de communication de données fournissant une qualité de service sur un réseau, ledit procédé comprenant:
un premier sous-système de communication de données recevant un premier paquet de données pour transmission à une couche de transport d'une pile de protocoles de communications en réseau, ledit sous-système de communication de données segmentant ledit premier paquet de données en une pluralité de paquets de données segmentés sur la base d'un seuil de taille de paquet de données; et
un deuxième sous-système de communication de données recevant ladite pluralité de paquets de données segmentés, ledit deuxième sous-système de communication de données réassemblant ladite pluralité de paquets de données segmentés en ledit premier paquet de données pour délivrance à une application dans lequel ledit deuxième sous-système de communication de données est au niveau d'un deuxième noeud distant dudit premier noeud
**caractérisé en ce que** ledit premier sous-système de communication de données est au-dessus de ladite couche de transport de ladite pile de protocoles de communications en réseau au niveau d'un premier noeud.

5. Système selon la revendication 4, dans lequel ledit deuxième sous-système de communication de données réassemble ladite pluralité de paquets de données segmentés en ledit premier paquet de données sur la base d'un identifiant associé avec chacun de ladite pluralité de paquets de données segmentés.

6. Support lisible par un ordinateur ayant un ensemble d'instructions pour une exécution sur un dispositif de traitement, ledit ensemble d'instructions comprenant:
une routine de segmentation pour comparer une taille d'un premier paquet de données à un critère de taille de paquet de données et segmenter ledit premier paquet de données pour produire une pluralité de paquets de données segmentés lorsque ladite taille dudit premier paquet de données excède ledit critère de taille de paquet de données;
une routine de transmission pour transmettre ladite pluralité de paquets de données segmentés à une couche de transport d'une pile de protocoles de communications en réseau; et
une routine de réassemblage pour réassembler ladite pluralité de paquets de données segmentés en ledit premier paquet de données dans lequel ladite routine de réassemblage est au niveau d'un deuxième noeud distant dudit premier noeud
**caractérisé en ce que** ladite routine de segmentation et ladite routine de transmission sont au-dessus de ladite couche de transport de ladite pile de protocoles de communications en réseau au niveau d'un premier noeud.
